# EUROPEAN PATENT SPECIFICATION

(11) **EP 3 081 874 B1**
(45) Date of publication and mention of the grant of the patent: **13.06.2018**
(21) Application number: 16164502.3
(22) Date of filing: 08.04.2016
(51) Int. Cl.: F24F 12/00, F24F 13/02

(54) **BUILDING WITH DEMAND-CONTROLLED HEAT EXCHANGE SYSTEM FOR VENTILATION AND HEAT EXCHANGE SYSTEM**
GEBÄUDE MIT BEDARFSGESTEUERTEM WÄRMETAUSCHSYSTEM ZUR BELÜFTUNG SOWIE WÄRMETAUSCHSYSTEM
CONSTRUCTION AVEC SYSTÈME D'ÉCHANGE THERMIQUE À COMMANDE DE VENTILATION ET LEDIT SYSTÈME

(30) Priority: 10.04.2015 NL 2014612
(43) Date of publication of application: 19.10.2016
(73) Proprietor: Vero Duco N.V., 8630 Veurne (BE)
(72) Inventor: Renson, Luc Louis, BE- 8620 Nieuwpoort (BE)
(74) Representative: Nederlandsch Octrooibureau

(56) References cited:
- CA-A1- 2 492 294
- FR-A1- 2 969 256
- NL-C- 2 008 944
- US-A1- 2007 169 927

## Description

The invention concerns a building comprising several rooms, of which one room is connected to a secondary air supply duct and a secondary air discharge duct, and of which another room is connected to another secondary air supply duct and another secondary air discharge duct, a heat exchange system according to claim 1, which is connected to the secondary air supply ducts and to the secondary air discharge ducts and to a main air supply duct and a main air discharge duct. Such a building is known and has the advantage that the energy for heating and/or cooling the various rooms thereof can be utilised more efficiently. The discharged air emits energy to the supplied air at the heat exchanger so that energy for heating or cooling the rooms can be saved.

The air which flows through the heat exchange system must be distributed evenly to a greater or lesser extent over the various rooms. In practice however, it is found that the need for the supply and discharge of air may differ greatly from room to room. This is affected by the occupation of the rooms, the moisture production, the incident sunlight and similar. In known buildings however, the set distribution of the supply to the various rooms and the discharge from the various rooms cannot be adapted, or can scarcely be adapted, to the actual requirements.

One aim of the invention is therefore to create a building in which the ventilation is improved. Another aim is to create a building in which the ventilation can be adjusted room by room. A further aim is to create a building in which the heat exchange system can be adapted flexibly. Yet another aim is to create a building in which firstly the energy demand can be handled efficiently, and in which secondly the supply/discharge of air can be regulated room by room. These and other aims are achieved in that the housing is provided with at least one flow regulator which is located between the heat exchanger and a secondary air supply duct and/or at least one flow regulator which is located between the heat exchanger and a secondary air discharge duct. The flow regulator or regulators located in the supply and/or discharge air flow offers/offer the possibility of adapting the air flow room by room, while the exchange of heat between the supplied and discharged air is retained. These functions are all accommodated in the heat exchange system so that a compact design is obtained which contains all the desired functions. This allows simple installation. In addition, because the flow regulator is provided in the housing, there are no visible connections between the flow regulators and the secondary supply and/or discharge ducts, nor are there any visible cable connections from the flow regulator(s) to the control system. Furthermore, the heat exchange system with the flow regulator(s) can be moved and connected as a whole. In addition, on overhaul of the system, in particular of the flow regulators, it is not necessary to decouple the secondary supply and/or discharge ducts.

A room may mean a spacial zone with one or more room sections or chambers. In this way, the supply/discharge of air can be regulated for each room and hence also for the one or more room sections of this room.

As already mentioned, the flow regulator may be contained in just one secondary air supply duct and/or in just one secondary air discharge duct. Preferably however, the embodiment comprises several flow regulators. For example, one flow regulator may be located in the supply flow passage between the heat exchanger and one of the secondary air supply ducts, and another flow regulator may be located between the heat exchanger and the other of the secondary air supply ducts, for individual regulation of the air flow through said one secondary air supply duct independently of the regulation of the air flow through said other secondary air supply duct.

Furthermore, in the discharge flow passage a flow regulator may be provided which is located between the heat exchanger and one of the secondary air discharge ducts, and another flow regulator which is located between the heat exchanger and another of the secondary air discharge ducts, for individual regulation of the air flow through said one secondary air discharge duct independently of regulation of the air flow through said other secondary air discharge duct.

In one embodiment, a flow regulator is provided for each secondary air supply and/or discharge duct. Alternatively, at least one flow regulator may be provided for two secondary air supply and/or discharge ducts.

In these embodiments, for each room for which the secondary air supply duct or secondary air discharge duct has a flow regulator, the ventilation can be adapted in the desired manner. This may be done in different ways. One example is regulation by means of a control panel located in the room concerned. Automatic regulation is however preferred in which a measuring system for measuring a property of the air is provided at least in the supply flow passage and/or discharge flow passage. Such a measuring system may for example comprise a sensor unit for measuring the CO2 content, the relative humidity and similar of the air. Furthermore, a control system may be provided for regulating the flow on the basis of the property measured by the measuring system.

As already stated, it may be desirable to be able to adapt the heat exchange systems flexibly. For example, it may be preferable to create a general embodiment which has the possibility of allowing regulation per secondary air supply duct or per secondary air discharge duct as required, while others may remain open. In an efficient embodiment, a flow regulator may here form part of a cassette, in which case the housing is provided by a cassette chamber in which the cassette is received. This cassette chamber may have a guide by means of which the cassette can be guided into the cassette chamber or out of the cassette chamber respectively. In such an embodiment, the flow regulator can be fitted or replaced very easily. It is also possible to install the flow regulator afterwards.

Preferably, the cassette guide is oriented transversely to the air flow direction through the supply flow passage and/or the discharge flow passage. The (guide of the) cassette chamber preferably has an opening which opens on the outside of the housing and is closed there by a cover. The flow regulator is thus firstly easily accessible from outside and secondly well protected from external influences by the cover. This could also cover the cables for the power supply, signal transmission and similar. In an efficient embodiment, several cassette chambers may be provided next to each other, which cassette chambers are closed by a common cover.

In particular, the flow regulator is located in or inside the housing of the heat exchange system. This also includes a position of the flow regulator(s) in the wall of the housing. The flow regulators and the associated cassettes are thus located under the cover which closes the housing. In this way, the flow regulators with the associated measuring system and control systems are well protected from external influences without the need for supplementary measures. Thus there are no parts which are located outside the housing or which are located between the secondary air supply ducts and the secondary air discharge ducts. This has the advantage that the ducts can be connected directly to the housing, which is important if little space is available for the installation. Reference is made to the prior art, consisting of a heat exchange system in which the flow regulators are arranged in the connected ducts. Such installations have relatively large dimensions, while the electrical lines for the power supply to the valves and for signal transmission must be installed afterwards. Because of the many separate components constituting the known systems, the dimensions of these systems are relatively large. Furthermore, the fitting of such an installation is labour-intensive. The various components such as valves, measuring systems and similar are less well protected. The invention also concerns a heat exchange system for a building, comprising a housing which contains a supply flow passage and a discharge flow passage, a heat exchanger by means of which the supply flow passage and the discharge flow passage are in a heat-exchanging relationship to each other, a main air supply connection at one end of the supply flow passage, at the other end of which supply flow passage at least two secondary air supply connections are located, a main air discharge connection at one end of the discharge flow passage, at the other end of which discharge flow passage at least two secondary air discharge connections are located, a booster for ensuring the flow of air through the main air supply connection via the supply flow passage and the secondary air supply connections, and a second booster for ensuring the flow of air via the secondary air discharge connections, the discharge flow passage and the main air discharge connection.

Such a system is known from publications FR 2 969 256 A1 and EP 2770267A2. The heat exchange system according to the invention is however characterized in that the housing is provided with at least one flow regulator located between the heat exchanger and a secondary air supply connection. In one embodiment, a flow regulator is provided for each secondary air supply and/or air discharge connection. Alternatively, at least one flow regulator may be provided for two secondary air supply and/or air discharge connections.

Preferably, several flow regulators are present. Thus a flow regulator may be placed in the supply flow passage, located between the heat exchanger and one of the secondary air supply connections, and another flow regulator is located between the heat exchanger and another of the secondary air supply connections, for the individual regulation of the air flow through said one secondary air supply connection independently of the regulation of the air flow through said other secondary air supply connection.

Furthermore, a flow regulator is preferably placed in the discharge flow passage and is located between the heat exchanger and one of the secondary air discharge connections, and furthermore another flow regulator which is located between the heat exchanger and another of the second air discharge connections, for individual regulation of the air flow through said one secondary air discharge connection independently of the regulation of the air flow through said other secondary air discharge connection. In particular, the flow regulator may be provided at the site of one secondary air supply connection and/or at the site of one secondary air discharge connection. The heat exchange system may furthermore be configured in the same way as described above in connection with a building. Preferably, the flow regulator is provided in the supply flow passage.

The invention will be explained with reference to an exemplary embodiment shown in the figures.
Figure 1 shows a building with a heat exchange system.
Figure 2 shows a top view in perspective of the opened heat exchange system.
Figure 3 shows the disassembled heat exchange system in perspective.
Figure 4 shows a top view of the opened heat exchange system.
Figure 5 shows a second embodiment of the heat exchange system, partly disassembled, in perspective.
Figure 6 shows a top view of the heat exchange system in Figure 5.
Figure 7 shows a diagrammatic side view of a further embodiment of the heat exchange system in opened state.
Figure 8 shows a cross-section of a cassette for the heat exchange system of Figure 7.

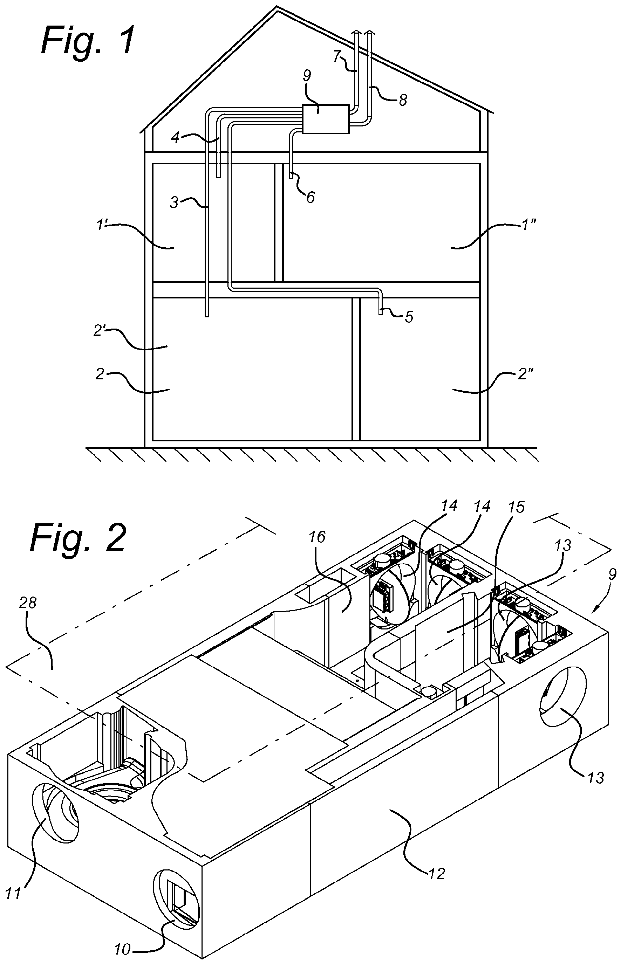

The building shown in Figure 1 has several rooms or zones 1, 2 to which air can be supplied by the secondary air supply ducts 3, 4. Also, air can be discharged from a room via the secondary air discharge ducts 5, 6. The rooms or zones 1, 2 each comprise two room sections or chambers 1', 1", 2', 2". The air to be supplied is conducted into the building via the main air supply duct 7 and discharged therefrom via the main air discharge duct 8. The heat exchange system indicated as a whole with reference numeral 9 is placed between the path formed between the main air supply duct 8 and the secondary air supply ducts 3, 4 on one side, and the path formed between the main air discharge duct 8 and the secondary air discharge ducts 5, 6 on the other.

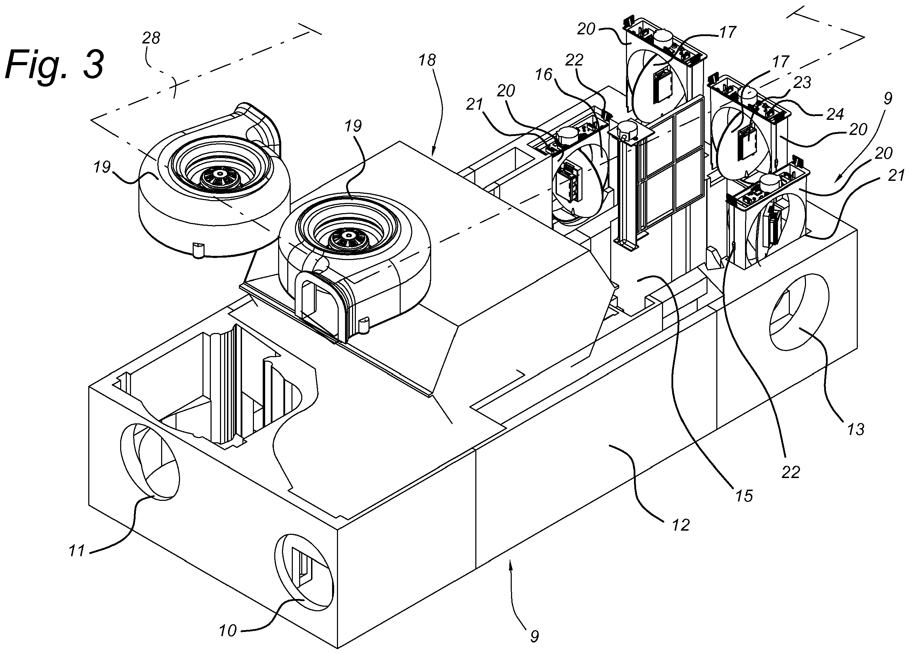

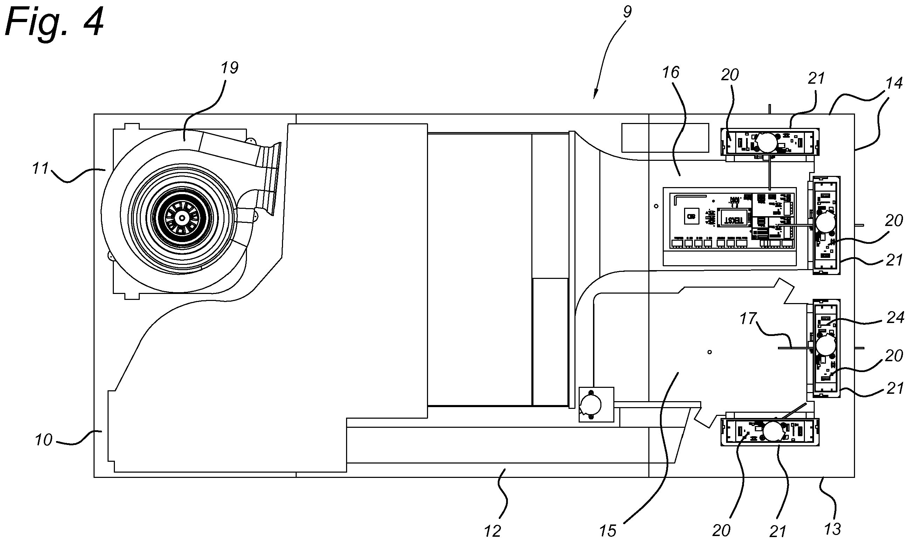

A first embodiment of the heat exchange system 9 is shown in Figures 2 - 4. This heat exchange system has a housing, designated as a whole as 12, with a main air supply connection 10 to which the main air supply duct 7 of Figure 1 connects. Furthermore, the heat exchange system has a main air discharge connection 11 to which the main air discharge duct 8 connects. At the other end of the housing are several, in this exemplary embodiment two, secondary air supply connections 13 and two secondary air discharge connections 14.

The supply flow passage 15 extends between the main air supply connection 10 and the secondary air supply connection 13. Correspondingly, the discharge flow passage 16 extends between the secondary air discharge connections 14 and the main air discharge connection 11. The heat exchanger designated as a whole as 18 is placed in the supply flow passage 15 and discharge flow passage 17, and ensures that energy is exchanged between the supplied air and the discharged air. The air is supplied and discharged by means of the two boosters 19, one of which is placed in the supply flow passage 15 and the other in the discharge flow passage 16.

In the general embodiment of the heat exchange system 9, depending on the resistance in the various ducts, the air flows to the various rooms or is extracted therefrom without further possibility of regulation. In connection with offering the possibility of a desired distribution of the supplied air, flow regulators 17 are placed in the secondary air supply connection 13. Each flow regulator is contained in a cassette 20, each of which in turn is held in a cassette chamber 21 located at or behind the corresponding secondary air supply connection 13. A cassette guide 22 is provided in each cassette chamber to facilitate the fitting or removal or replacement of such a cassette 20.

Each cassette furthermore has a measuring system 23, which may for example comprise a sensor for measuring the CO2 value of the air, the humidity or similar. In the exemplary embodiment shown, the measuring system 23 is placed on the flow regulator 17 itself, but it is also possible to place this elsewhere on the cassette or elsewhere in the supply flow passage 15, or to place a separate sensor in the room. In addition, a control system 24 is provided on the cassette 20 with which, on the basis of the data obtained by the measuring system 23, the flow regulator 17 can be set to the desired level.

Correspondingly, similar cassettes 20, cassette chambers 21 and cassette guides 22 are provided at the secondary air supply connections 24. All cassette chambers can be covered by the cover 28 with which the housing 12 as a whole is closed.

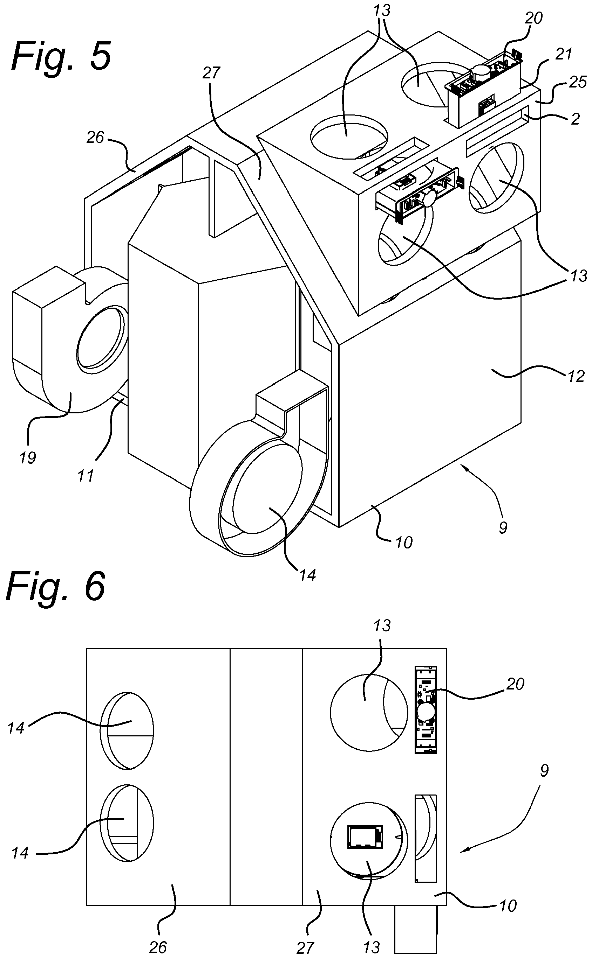

In the exemplary embodiment of Figures 5 and 6, the heat exchange system 9 has a housing 12 with two walls 26, 27 placed obliquely. The one wall 26 has two secondary air discharge connections 14. A distributor piece 25 is fitted on the second obliquely placed wall 27, and in total has four secondary air supply connections 13. A cassette 20 is arranged at each of the secondary air supply connections 14, wherein the cassette chambers 21 may be placed horizontally or vertically, depending on the orientation of the respective secondary air supply connection 13. These cassette chambers are also covered by a cover (not shown).

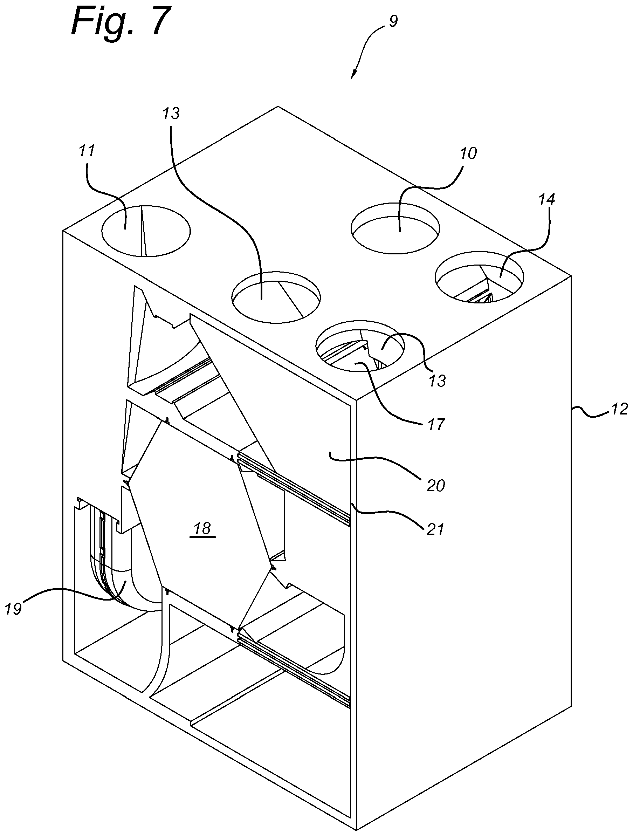

Figure 7 shows a diagrammatic side view of a further embodiment of the heat exchange system 9, in an opened state. This heat exchange system 9 has a housing, designated as a whole as 12, with a main air supply connection 10 to which the main air supply duct 7 of Figure 1 connects. Furthermore, the heat exchange system 9 has a main air discharge connection 11 to which the main air discharge duct 8 connects. At the same end of the housing 12 are several, in the exemplary embodiment shown two, secondary air supply connections 13 and one secondary air discharge connection 14.

The supply flow passage (not shown) extends between the main air supply connection 10 and the secondary air supply connection 13. Correspondingly, the discharge flow passage (not shown) extends between the secondary air discharge connections 14 and the main discharge air connection 11. The heat exchanger, designated as a whole as 18, is placed in this supply flow passage and discharge flow passage, and ensures that energy is exchanged between the supplied air and the discharged air. The air is supplied and discharged by means of two boosters 19 (only one shown in Figure 7), one of which is placed in the supply flow passage and the other in the discharge flow passage. In connection with offering the possibility of a desired distribution of supplied air, a flow regulator 17 is placed in the secondary air supply connection 13. The flow regulator 17 is held in a cassette 20 which in turn is received in a cassette chamber 21, located at or behind the respective secondary air supply connection 13. In this embodiment of the heat exchange system 9, one flow regulator 17 is provided per two secondary supply connections 13.

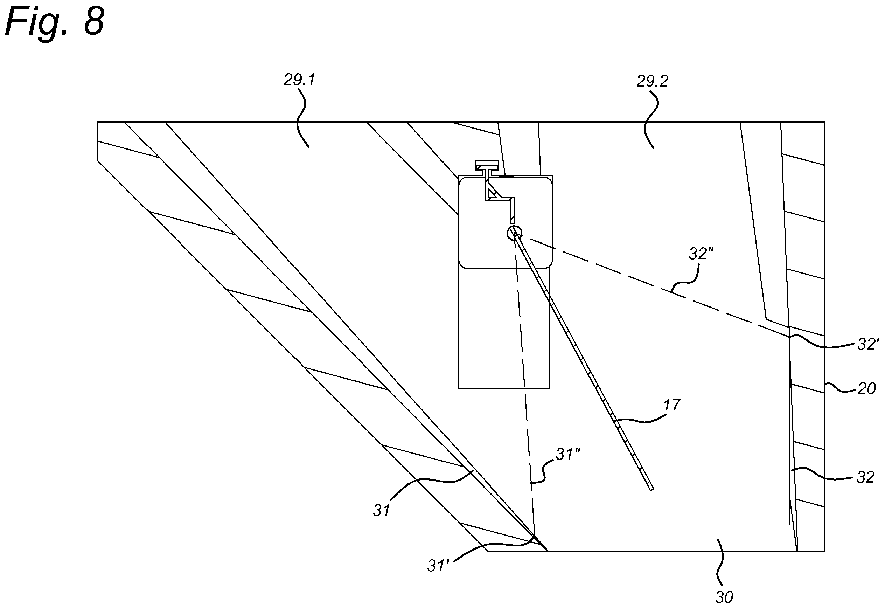

Figure 8 shows a cross-section of a cassette for the heat exchange system in Figure 7. The cassette 20 is provided with two cassette outlets 29 located next to each other, which connect to the respective secondary supply connections 13 when the cassette is introduced in the system 9, and an opposing cassette inlet 30 which connects to the supply flow passage of the system 9. The flow regulator or valve 17 is provided with a suspension point between the two cassette outlets 29. The valve 17 functions as a flow regulator for both cassette outlets 29 or secondary supply connections 13.

The flow regulator or valve 17 may assume various positions for regulating the flow through the respective cassette outlets 29 or the secondary supply connections 13. In the state shown, the valve 17 allows air to flow through the cassette from the cassette inlet 30 through both a first cassette outlet 29.1 and a second cassette outlet 29.2. In a first closed position 31", the valve 17 is oriented towards a first contact wall 31 of the cassette 20. A free end of the valve 17 then rests on the first contact wall 31 at a first contact point 31'. In the first closed position, the first cassette outlet 29.1 is closed so that the air flow is now allowed only from the cassette inlet 30 to the second cassette outlet 29.2.

In a second closed position 32", the valve 17 is oriented towards a second contact wall 32 of the cassette 20. The free end of the valve 17 rests on the second contact wall 32 at a second contact point 32'. In the second closed position, the second cassette outlet 29.2 is closed so that the air flow is now allowed only from the cassette inlet 30 to the first cassette outlet 29.1.

The air flow to the respective cassette outlets may be regulated further by orienting the valve 17 in any desired position between the first and second closed state. When the valve 17 is oriented closer to the first contact wall 31, the opening for air flow to the first cassette outlet 29.1 is smaller, so that the air flow through this cassette outlet will be reduced. At the same time, the opening for air flow to the second cassette outlet 29.2 becomes larger, so that the air flow through the second cassette outlet will increase. The converse applies when the flap 17 is oriented more towards the second contact wall 32.

### List of Reference Numerals

- 1., 2.: Room
- 3., 4.: Secondary air supply duct
- 5., 6.: Secondary air discharge duct
- 7.: Main air supply duct
- 8.: Main air discharge duct
- 9.: Heat exchange system
- 10.: Main air supply connection
- 11.: Main air discharge connection
- 12.: Housing of heat exchange system
- 13.: Secondary air supply connection
- 14.: Secondary air discharge connection
- 15.: Supply flow passage
- 16.: Discharge flow passage
- 17.: Flow regulator
- 18.: Heat exchanger
- 19.: Booster
- 20.: Cassette
- 21.: Cassette chamber
- 22.: Cassette guide
- 23.: Measuring system
- 24.: Control system
- 25.: Distributor piece
- 26.: Oblique wall
- 27.: Oblique wall
- 28.: Cover for housing
- 29.: Cassette outlet
- 30.: Cassette inlet
- 31.: First cassette contact wall
- 31'.: First cassette contact point
- 32.: Second cassette contact wall
- 32'.: Second cassette contact point

### Lijst van verwijzingstekens

- 1., 2.: Ruimte
- 3., 4.: Luchttoevoerhulpkanaal
- 5., 6.: Luchtafvoerhulpkanaal
- 7.: Luchttoevoerhoofdkanaal
- 8.: Luchtafvoerhoofdkanaal
- 9.: Warmtewisselingssysteem
- 10.: Luchttoevoerhoofdaansluiting
- 11.: Luchtafvoerhoofdaansluiting
- 12.: Behuizing van warmtewisselingssysteem
- 13.: Luchttoevoerhulpaansluiting
- 14.: Luchtafvoerhulpaansluiting
- 15.: Toevoerstromingsdoorgang
- 16.: Afvoerstromingsdoorgang
- 17.: Debietregelaar
- 18.: Warmtewisselaar
- 19.: Aanjager
- 20.: Cassette
- 21.: Cassettekamer
- 22.: Cassettegeleiding
- 23.: Meetsysteem
- 24.: Regelsysteem
- 25.: Verdeelstuk
- 26.: Schuine wand
- 27.: Schuine wand
- 28.: Deksel voor behuizing
- 29.: Cassetteuitlaat
- 30.: Cassetteinlaat
- 31.: Eerste cassetteaanslagwand
- 31': Eerste cassetteaanslagpunt
- 32.: Tweede cassetteaanslagwand
- 32': Tweede cassetteaanslagpunt

## Claims

1. Heat exchange system (9) for a building, comprising a housing (12) which contains a supply flow passage (15) and a discharge flow passage (16), a heat exchanger (18) by means of which the supply flow passage and the discharge flow passage are in a heat-exchanging relationship to each other, a main air supply connection (10) at one end of the supply flow passage, at the other end of which supply flow passage at least two secondary air supply connections (13) are located, a main air discharge connection (11) at one end of the discharge flow passage, at the other end of which discharge flow passage at least two secondary air discharge connections (14) are located, a booster (19) for ensuring the flow of air through the main air supply connection via the supply flow passage and the secondary air supply connections, and a second booster (19) for ensuring the flow of air via the secondary air discharge connections, the discharge flow passage and the main air discharge connection,
**characterized in, that**
the housing (12) is provided with at least one flow regulator (17) which is located between the heat exchanger (18) and a secondary air supply connection (13).

2. Heat exchange system according to claim 1, wherein the at least one flow regulator (17) is located between the heat exchanger (18) and at least two secondary air supply connections (13).

3. Heat exchange system according to one of the preceding claims, wherein the flow regulator is located in or inside the housing of the heat exchange system.

4. Heat exchange system (9) according to claim 1, wherein the supply flow passage (15) is provided with a flow regulator (17) which is located between the heat exchanger (18) and one of the secondary air supply connections (13), and another flow regulator (17) which is located between the heat exchanger (18) and another of the secondary air supply connections (13), for individual regulation of the air flow through said one secondary air supply connection independently of the regulation of the air flow through said other secondary air supply connection.

5. Heat exchange system (9) according to any of the preceding claims, wherein at least one flow regulator (17) is located at the site of a secondary air supply connection (13).

6. Heat exchange system (9) according to any of the preceding claims, wherein at least one flow regulator (17) forms part of a cassette (20) and the housing (12) is provided with a cassette chamber (21) in which the cassette is received.

7. Heat exchange system (9) according to claim 6, wherein the cassette chamber (21) has a guide (22) by means of which the cassette (20) can be guided into or out of the cassette chamber.

8. Heat exchange system according to claim 7, wherein the guide (22) is arranged transversely relative to the air flow direction through the supply flow passage (15) and/or the discharge flow passage (16).

9. Heat exchange system (9) according to claim 7 or 8, wherein the cassette chamber (21) and/or the guide (22) has an opening which opens on the outside of the housing and is closed there by a cover (28).

10. Heat exchange system (9) according to claim 9, wherein several cassette chambers (20) are provided next to each other and closed by a common cover (28).

11. Heat exchange system (9) according to any of the preceding claims, wherein at least the supply flow passage (15) and/or the discharge flow passage (16) is provided with a measuring system (23) for measuring a property of the air.

12. Heat exchange system (9) according to claim 11, wherein a control system (24) is provided for controlling a flow regulator (17) on the basis of the property measured by the measuring system (23).

13. Heat exchange system (9) according to claim 11 or 12, wherein the measuring system (23) and/or the control system (24) form part of the cassette (20).

14. Building comprising several rooms (1, 2), of which one room is connected to a secondary air supply duct (3, 4) and a secondary air discharge duct (5, 6), and of which another room is connected to another secondary air supply duct and another secondary air discharge duct, a heat exchange system (9) according to any of the preceding claims, which is connected to the secondary air supply ducts (3, 4) and to the secondary air discharge ducts (5, 6) and to a main air supply duct (7) and a main air discharge duct (8).

## Patentansprüche

1. Wärmeübertragersystem (9) für ein Gebäude, umfassend
ein Gehäuse (12), welches einen Zuluftdurchlass (15) und einen Abluftdurchlass (16) beinhaltet,
einen Wärmeübertrager (18), mit dem der Zuluftdurchlass und der Abluftdurchlass in einer Wärmeübertragungsbeziehung zueinander stehen,
eine Hauptluftzufuhrverbindung (10) an einem Ende des Zuluftdurchlasses, an dessen anderem Ende zumindest zwei Sekundärluftverbindungen (13) angeordnet sind,
eine Hauptluftablassverbindung (11) an einem Ende des Abluftdurchlasses, an dessen anderem Ende zumindest zwei Sekundärluftablassverbindungen (14) angeordnet sind,
einen Verstärker (19), um die Strömung von Luft durch die Hauptluftzufuhrverbindung über den Zuluftdurchlass und die Sekundärluftzufuhrverbindung sicherzustellen,
und einen zweiten Verstärker (19), um die Strömung von Luft durch die Sekundärluftablassverbindung, den Abluftdurchlass und die Hauptluftablassverbindung sicherzustellen,
**dadurch gekennzeichnet, dass**
das Gehäuse (12) mit zumindest einem Strömungsregler (17), welcher zwischen dem Wärmeübertrager (18) und einer Sekundärluftzufuhrverbindung (13) angeordnet ist, versehen ist.

2. Wärmeübertragersystem nach Anspruch 1, wobei der zumindest eine Strömungsregler (17) zwischen dem Wärmeübertrager (18) und zumindest zwei Sekundärluftzufuhrverbindung (13) angeordnet ist.

3. Wärmeübertragersystem nach einem der vorstehenden Ansprüche, wobei der Strömungsregler in oder innerhalb des Gehäuses des Wärmeübertragersystems angeordnet ist.

4. Wärmeübertragersystem (9) nach Anspruch 1, wobei der Zuluftdurchlass (15) mit einem Strömungsregler (17) versehen ist, der zwischen dem Wärmeübertrager (18) und einer der Sekundärluftzufuhrverbindung (13) angeordnet ist, und mit einem weiteren Strömungsregler (17), der zwischen dem Wärmeübertrager (18) und einer anderen der Sekundärluftversorgungsanschlüsse (13) angeordnet ist, zur individuellen Regelung des Luftstroms durch die eine Sekundärluftzufuhrverbindung unabhängig von der Regelung des Luftstroms durch die andere Sekundärluftzufuhrverbindung.

5. Wärmeübertragersystem (9) nach einem der vorstehenden Ansprüche, wobei zumindest ein Strömungsregler (17) an der Seite einer Sekundärluftzufuhrverbindung (13) angeordnet ist.

6. Wärmeübertragersystem (9) nach einem der vorstehenden Ansprüche, wobei mindestens ein Strömungsregler (17) einen Teil einer Kassette (20) ausbildet und das Gehäuse (12) mit einer Kassettenkammer (21) versehen ist, in der die Kassette aufgenommen ist.

7. Wärmeübertragersystem (9) nach Anspruch 6, wobei die Kassettenkammer (21) eine Führung (22) aufweist, mit der die Kassette (20) in die oder aus der Kassettenkammer hinein- oder herausgeführt werden kann.

8. Wärmeübertragersystem nach Anspruch 7, wobei die Führung (22) quer zur Luftströmungsrichtung durch den Zuluftdurchlass (15) und/oder den Abluftdurchlass (16) angeordnet ist.

9. Wärmeübertragersystem (9) nach Anspruch 7 oder 8, wobei die Kassettenkammer (21) und/oder die Führung (22) eine Öffnung aufweist, die sich an der Außenseite des Gehäuses öffnet und dort durch einen Deckel (28) verschlossen ist.

10. Wärmeübertragersystem (9) nach Anspruch 9, wobei mehrere Kassettenkammern (20) nebeneinander vorgesehen sind und durch eine gemeinsame Abdeckung (28) verschlossen sind.

11. Wärmeübertragersystem (9) nach einem der vorstehenden Ansprüche, wobei zumindest der Zuluftdurchlass (15) und/oder der Abluftdurchlass (16) mit einem Messsystem (23) zur Messung einer Eigenschaft der Luft versehen ist.

12. Wärmeübertragersystem (9) nach Anspruch 11, wobei ein Steuersystem (24) zur Steuerung eines Strömungsreglers (17) auf der Grundlage der von dem Messsystem (23) gemessenen Eigenschaft vorgesehen ist.

13. Wärmeübertragersystem (9) nach Anspruch 11 oder 12, wobei das Messsystem (23) und/oder das Steuerungssystem (24) einen Teil der Kassette (20) bilden.

14. Gebäude, welches mehrere Räume (1, 2), von denen ein Raum mit einem Sekundärluftzufuhrkanal (3, 4) und einem Sekundärluftaustrittskanal (5, 6) verbunden ist, und von denen ein anderer Raum mit einem weiteren Sekundärluftzufuhrkanal und einem weiteren Sekundärluftaustrittskanal verbunden ist, und ein Wärmeübertragersystem (9), nach einem der vorstehenden Ansprüche, umfasst
welches mit den Sekundärluftzufuhrkanälen (3, 4) und den Sekundärluftaustrittskanälen (5, 6) sowie mit einem Hauptluftzufuhrkanal (7) und einem Hauptluftaustrittskanal (8) verbunden ist.

## Revendications

1. Système d'échange thermique (9) pour un bâtiment, comprenant un boîtier (12) qui contient un passage d'écoulement d'alimentation (15) et un passage d'écoulement d'évacuation (16), un échangeur thermique (18) à l'aide duquel le passage d'écoulement d'alimentation et le passage d'écoulement d'évacuation sont dans une relation d'échange thermique l'un avec l'autre, une connexion d'alimentation en air principale (10) à une extrémité du passage d'écoulement d'alimentation, à l'autre extrémité duquel sont situées aux moins deux connexions d'alimentation en air secondaires (13), une connexion d'évacuation d'air principale (11) à une extrémité du passage d'écoulement d'évacuation, à l'autre extrémité duquel passage d'écoulement d'évacuation sont situées au moins deux connexions d'évacuation d'air secondaires (14), un amplificateur (19) pour assurer l'écoulement d'air à travers la connexion d'alimentation en air principale via le passage d'écoulement d'alimentation et les connexions d'alimentation en air secondaires, et un second amplificateur (19) pour assurer l'écoulement d'air via les connexions d'évacuation d'air secondaires, le passage d'écoulement d'évacuation et la connexion d'évacuation d'air principale,
**caractérisé en ce que**
le boîtier (12) est muni d'au moins un régulateur d'écoulement (17) qui est situé entre l'échangeur thermique (18) et une connexion d'alimentation en air secondaire (13).

2. Système d'échange thermique selon la revendication 1, dans lequel le au moins un régulateur d'écoulement (17) est situé entre l'échangeur thermique (18) et au moins deux connexions d'alimentation en air secondaires (13).

3. Système d'échange thermique selon l'une des revendications précédentes, dans lequel le régulateur d'écoulement est situé dans ou à l'intérieur du boîtier du système d'échange thermique.

4. Système d'échange thermique (9) selon la revendication 1, dans lequel le passage d'écoulement d'alimentation (15) est muni d'un régulateur d'écoulement (17) qui est situé entre l'échangeur thermique (18) et une première des connexions d'alimentation en air secondaires (13), et d'un autre régulateur d'écoulement (17) qui est situé entre l'échangeur thermique (18) et une autre des connexions d'alimentation en air secondaires (13), pour réguler individuellement l'écoulement d'air à travers ladite première connexion d'alimentation en air secondaire indépendamment de la régulation de l'écoulement d'air à travers ladite autre connexion d'alimentation en air secondaire.

5. Système d'échange thermique (9) selon l'une quelconque des revendications précédentes, dans lequel au moins un régulateur d'écoulement (17) est situé au niveau de l'emplacement d'une connexion d'alimentation en air secondaire (13).

6. Système d'échange thermique (9) selon l'une quelconque des revendications précédentes, dans lequel au moins un régulateur d'écoulement (17) forme une partie d'une cassette (20) et le boîtier (12) est muni d'une chambre à cassette (21) dans laquelle la casette est reçue.

7. Système d'échange thermique (9) selon la revendication 6, dans lequel la chambre à cassette (21) comporte un guide (22) à l'aide duquel la cassette (20) peut être guidée dans ou hors de la chambre à cassette.

8. Système d'échange thermique selon la revendication 7, dans lequel le guide (22) est disposé transversalement par rapport à la direction d'écoulement d'air à travers le passage d'écoulement d'alimentation (15) et/ou le passage d'écoulement d'évacuation (16).

9. Système d'échange thermique (9) selon la revendication 7 ou 8, dans lequel la chambre à cassette (21) et/ou le guide (22) a une ouverture qui s'ouvre sur l'extérieur du boîtier et est fermée par un couvercle (28).

10. Système d'échange thermique (9) selon la revendication 9, dans lequel plusieurs chambres à cassette (20) sont agencées les unes à côté des autres et fermées par un couvercle commun (28).

11. Système d'échange thermique (9) selon l'une quelconque des revendications précédentes, dans lequel au moins le passage d'écoulement d'alimentation (15) et/ou le passage d'écoulement d'évacuation (16) est muni d'un système de mesure (23) pour mesurer une propriété de l'air.

12. Système d'échange thermique (9) selon la revendication 11, dans lequel un système de commande (24) est conçu pour commander un régulateur d'écoulement (17) sur la base de la propriété mesurée par le système de mesure (23).

13. Système d'échange thermique (9) selon la revendication 11 ou 12, dans lequel le système de mesure (23) et/ou le système de commande (24) forment une partie de la cassette (20).

14. Bâtiment comprenant plusieurs salles (1, 2), parmi lesquelles une salle est raccordée à un conduit d'alimentation en air secondaire (3, 4) et à un conduit d'évacuation d'air secondaire (5, 6), et une autre salle est raccordée à un autre conduit d'alimentation en air secondaire et à un autre conduit d'évacuation d'air secondaire, un système d'échange thermique (9) selon l'une quelconque des revendications précédentes, qui est raccordé aux conduits d'alimentation en air secondaires (3, 4) et aux conduits d'évacuation d'air secondaires (5, 6) et à un conduit d'alimentation en air principal (7) et à un conduit d'évacuation d'air principal (8).
